# EUROPEAN PATENT APPLICATION

(11) **EP 2 857 463 A1**
(43) Date of publication of application: **08.04.2015**
(21) Application number: 13881914.9
(22) Date of filing: 01.11.2013
(51) Int. Cl.: C09D 11/16

(54) **REVERSIBLE TEMPERATURE SENSITIVE ERASABLE NEUTRAL INK COMPOSITION AND MANUFACTURING METHOD THEREOF**

(30) Priority: 07.04.2013 CN 201310117898
(71) Applicant: Shanghai Xinyuan Stationery Co., Ltd., Jinshan, Shanghai 201505 (CN)
(72) Inventor: DU, Liang, Jinshan Shanghai 201505 (CN)
(74) Representative: Hocking, Adrian Niall
(86) International application number: PCT/CN2013/086424
(87) International publication number: WO 2014/166240

(57) **Abstract**

The present invention discloses a reversible temperature-changing and erasable neutral ink component and its manufacture method, which comprising by weight of composition as follows: (a) 30∼50 by weight of reversible temperature-changing pigment; (b) 2∼5 by weight of shear thinned viscosity regulator; (c) 0∼5 by weight of viscosity stabilizer; (d) 5∼20 by weight of moisture wetting agent; (e) 0.05∼0.5 by weight of antiseptic antimildew agent; (f) 14.5∼72.95 by weight of deionized water; the all weight of the composition of (a)∼(f) are 95∼100% percent of total weight of the component. The neutral ink of the present invention has excellent writing performance, instant erasable, long time erasable and excellent rewriting performance.

## Description

### FIELD OF THE INVENTION

The present invention relates to a reversible temperature-changing neutral ink component, specially relates to a reversible temperature-changing and erasable neutral ink component and its manufacture method.

### BACKGROUND OF THE INVENTION

At present the erasable hard pen writing tools in the market mainly divide into pencil, erasable ball-point pen, acid-base color eliminating erasable pen, ordinary eraser erasable neutral pen which handwriting can be obliterated, erased and amended, besides of these the handwriting of the other writing tools is not easy to amend. At present although the newest ordinary eraser erasable neutral pen can be erased by eraser, but it leaves obvious handwriting after erasing by the eraser, then after rewriting, the typeface will be obscure and affect the virsion effect; and it has requirement on the selection of the paper, writing on the exercise books of the students, the friction between the paper sheets will make the handwriting obscure because of the poor fastness, while writing on the office A4 paper, there will leave deep handwriting after erasing.

At present the erasable neutral ink in the market are as follows:
Firstly, dyestuff wrapped by rubber polymer material, oil solubility eraser erasable ball-point pen ink using volatility organic solvent as isotopic carrier, is not safe and not environmentally safe.
Secondly, magic neutral pen ink which makes color eliminating to color returning using chemical reaction and acid-base neutralize theory, so usally using two pens, one(containing acid ink) for writing to color developing, the other one (containing base agent) for obliterating and erasing when needs amendment, making the color eliminating when the acid-base neutralize, and can not be used repeatly on the same wrong typeface position, this kind of pen needs to take two pens, so it is not convenient to use, and not safe and not environmentally safe because of the chemistry reaction when using the pens.
Thirdly, ordinary eraser erasable neutral pen ink which achieves the erasable effect by making the pigment particle remain on the suface of the paper using size of the pigment particle and coalescing agent. Though this kind of ink can be erased by eraser, but it leaves obscure writing after erasing by the eraser, then after rewriting, the typeface will be obscure and affect the virsion effect, because the particle evenness is hard to control and most of the little particle will be permeated into the fiber of the paper, and it has requirement on the selection of the paper, writing on the exercise books of the students, the friction between the paper sheets will make the handwriting obscure because of the poor fastness, while writing on the office A4 paper, there will be deep handwriting after erasing.

As all above described, the present field urgently demands a writing tool with excellent writing performance, instant erasable, long time erasable and excellent rewriting performance. It is necessary to exceed the ink in the present market with various disadvantages, such as the erasable neutral ink is with poor fastness, selecting paper and leaving obvious handwriting after erasing.

### SUMMARY OF THE INVENTION

The present invention is a reversible temperature-changing and erasable neutral ink component and its manufacture method.

The first purpose of the present invention is to obtain a writing tool with excellent writing performance, instant erasable, long time erasable and excellent rewriting performance; the second purpose of the present invention is to exceed the ink in the present market with various disadvantages, such as the erasable neutral ink is with poor fastness, selecting paper and leaving obvious handwriting after erasing.

The technical proposal of the present invention is as follows:

The present invention provides a reversible temperature-changing and erasable neutral ink component, comprising by weight of composition as follows:
(a) 30∼50 by weight of reversible temperature-changing pigment;
(b) 2∼5 by weight of shear thinned viscosity regulator;
(c) 0∼5 by weight of viscosity stabilizer;
(d) 5∼20 by weight of moisture wetting agent;
(e) 0.05∼0.5 by weight of antiseptic antimildew agent;
(f) 14.5~72.95 by weight of deionized water;
the weight of all the composition of (a)~(f) is 95~100% percent of total weight of the component.

Another aspect of the present invention, the reversible temperature-changing pigment of (a) is taken from: temperature-changing pigment with particle dispersion by size of 1~50 micrometer or reversible temperature-changing microcapsule wrapped by resin.

Another aspect of the present invention, temperature range of the temperature-changing pigment is -30°C~80°C; temperature of color eliminating is 43°C~80°C, temperature of color returning is -1 °C~-30°C.

Another aspect of the present invention, the resin wrapped the reversible temperature-changing microcapsule is taken from acrylic resin or polyurethane resin or melamine resin.

Another aspect of the present invention, the shear thinned viscosity regulator of (b) is material controlling the exponent of the shear thinned of the ink betweent 2.5∼5.

Another aspect of the present invention, the shear thinned viscosity regulator is taken from: konjac glucomannan, xanthan gum, guar gum, vegetable glue, acrylic emulsion and modified polyethylene polysaccharide or combinations thereof.

Another aspect of the present invention, the viscosity stabilizer of (c) is taken from: triethanolamine, ammonium hydroxide and carbamide or combinations thereof.

Another aspect of the present invention, the moisture wetting agent of (d) is taken from: glycerinum, ethanediol, polyethylene glycol 200, polyethylene glycol 400, polyethylene glycol 600, polyethylene glycol 800, sorbitol and newtol or combinations thereof.

Another embodiment of the present invention, a manufacture methord of the component, comprising procedures as follows:
stiring and dispersing the acceptable weight of deionized water and reversible temperature-changing pigment evenly, then separating the dispersed liquid using centrifugation and cotrolling the size of the reversible temperature-changing pigment particle 1~6 micrometer to obtain reversible temperature-changing pigment dispersed liquid or reversible temperature-changing microcapsule; adding the reversible temperature-changing pigment dispersed liquid or reversible temperature-changing microcapsule after stiring and mixing the other deionized water, antiseptic antimildew agent, dispersing agent, moisture wetting agent and viscosity stabilizer, and adding the shear thinned viscosity regulator during the stiring, and rasing the stiring speed according to the rasing viscosity, stiring and mixing to obtain the mixture.

Another embodiment of the present invention, a reversible temperature-changing and erasable neutral ink obtained by the component.

The purpose of the present invention is to provide a reversible temperature-changing and erasable neutral ink component and its manufacture method. The ink can be used in neutral pen which can write fluently, and the according eraser of the cap of the pen can be used to obliterate the handwriting after wrong writing and remodify without any handwriting, the color is bright and the pen can write on any kind of paper with excellent abrasive resistance.

In addition, because of the particularity of the temperature-changing material of the reversible temperature-changing and erasable neutral ink, there will be some corresponding improvement during the manufacture of the ink, the matching work with the subsequence pen point will also need a lot of factory mass experiment validation, so as to make sure the high stability of the reversible temperature-changing and erasable neutral ink and write fluently, and the less difference between the production bath, and the strong matching with the pen point.

The advantage of the present invention is: the present invention obtains a writing tool with excellent writing performance, instant erasable, long time erasable and excellent rewriting performance. It is necessary to exceed the ink in the present market with various disadvantages, such as the erasable neutral ink is with poor fastness, selecting paper and leaving obvious handwriting after erasing.

### DETAILED DESCRIPTION OF THE INVENTION

The technical proposal is detailed described as follows. The embodiments of the invention described herein are exemplary but not restrict it, although detailed described the present invention referring to the preferable embodiment, a person skilled in the art should understand, that the scope of the invention is indicated by the appended claims, and all changes that fall within the meaning and range of equivalents are intended to be embraced therein.

### (a) reversible temperature-changing pigment

The reversible temperature-changing pigment of the present invention is a kind of special pigment with flexible temperature and is sensible to temperature. Specifically the reversible temperature-changing pigment is that the original color will become another color when being heated, and return the original color when the temperature is reducing.

The reversible temperature-changing pigment of the present invention can be obtained from the market, and can also be obtained according to manufacture by the present technical.

### (b) shear thinned viscosity regulator

The shear thinned viscosity regulator of the present invention is a material controlling the range of the shear thinned exponent of the ink.

The shear thinned viscosity regulator of the present invention can be obtained from the market.

### (c) viscosity stabilizer

The viscosity stabilizer of the present invention is a thickener adjusting the viscosity of the ink by acid-base balance.

The viscosity stabilizer of the present invention can be obtained from the market.

### (d) moisture wetting agent

The moisture wetting agent of the present invention is a dispersing agent with some moisture effect, the dispersing agent with affinity groups can disperse the pigment evenly and stabilize the pigment particle for a long time.

The moisture wetting agent of the present invention can be obtained from the market.

### (e) antiseptic antimildew agent

There is no special restriction of the antiseptic antimildew agent of the present invention, so long as to comform to the requirement of the system, not to produce restriction to the purpose of the present invention.

The present invention obtains a writing tool with excellent writing performance, instant erasable, long time erasable and excellent rewriting performance. It is necessary to exceed the ink in the present market with various disadvantages, such as the erasable neutral ink is with poor fastness, selecting paper and leaving obvious handwriting after erasing.

The purpose of the present invention is to provide a reversible temperature-changing and erasable neutral ink component and its manufacture method. The ink can be used in neutral pen which can write fluently, and the according eraser of the cap of the pen can be used to obliterate the handwriting after wrong writing and remodify without any handwriting, the color is bright and the pen can write on any kind of paper with excellent abrasive resistance.

In addition, because of the particularity of the temperature-changing material of the reversible temperature-changing and erasable neutral ink, there will be some corresponding improvement during the manufacture of the ink, the matching work with the subsequence pen point will also need a lot of factory mass experiment validation, so as to make sure the high stability of the reversible temperature-changing and erasable neutral ink and write fluently, and the less difference between the production bath, and the strong matching with the pen point.

### Embodiment 1

The present invention discloses a manufacture method of a reversible temperature-changing and erasable neutral ink.

A manufacture method of a reversible temperature-changing and erasable neutral ink, comprising procedures as follows:
(a) 30 by weight of reversible temperature-changing microcapsule wrapped by acrylic resin;
(b) 2 by weight of konjac glucomannan;
(c) 1 by weight of triethanolamine;
(d) 10 by weight of glycerinum;
(c) 0.5 by weight of antiseptic antimildew agent;
(f) 14.5 by weight of deionized water;

The mixture is obtained by the above described mixing; the weight of the above described composition is of 96% percent of total weight of the component. In above described composition it contains 4% other agent, calculating by the total weight of the reversible temperature-changing and erasable neutral ink, the kind and composition of the agent has no restriction, so long as to not produce restriction to the purpose of the present invention.

For example, the agent is spice etc.

Meanwhile, it can also contain PH modifier which makes the obtained reversible temperature-changing pigment in the reversible temperature-changing and erasable neutral ink in a proper PH environment, and achieves neutral effect.

(B) obtain reversible temperature-changing and erasable neutral ink by aftertreatment of the mixture of procedure (A).

A reversible temperature-changing and erasable neutral ink of the component, the mixture of procedure (A) is obtained by procedures as follows:
stiring and dispersing the acceptable weight of deionized water and reversible temperature-changing pigment evenly, then separating the dispersed liquid using centrifugation and cotrolling the size of the reversible temperature-changing pigment particle 1~6 micrometer to obtain reversible temperature-changing pigment dispersed liquid (or reversible temperature-changing microcapsule); adding the reversible temperature-changing pigment dispersed liquid (or reversible temperature-changing microcapsule) after stiring and mixing the other deionized water, antiseptic antimildew agent, dispersing agent, moisture wetting agent and viscosity stabilizer, and adding the shear thinned viscosity regulator during the stiring, and rasing the stiring speed according to the rasing viscosity, stiring and mixing to obtain the mixture.
so as to make sure the high stability of the reversible temperature-changing and erasable neutral ink and write fluently, and the less difference between the production bath, and the strong matching with the pen point.

### Embodiment 2

A reversible temperature-changing and erasable neutral ink, comprising procedures as follows:
(a) 50 by weight of reversible temperature-changing microcapsule wrapped by polyurethane resin;
(b) 5 by weight of xanthan gum and guar gum;
(c) 1 by weight of ammonium hydroxide and carbamide;
(d) 15 by weight of ethanediol and polyethylene glycol 200;
(e) 0.5 by weight of antiseptic antimildew agent;
(f) 50 by weight of deionized water;

The mixture is obtained by the above described mixing; the weight of the above described composition is of 99% percent of total weight of the component. In above described composition it contains 1% other agent, calculating by the total weight of the reversible temperature-changing and erasable neutral ink, the kind and composition of the agent has no restriction, so long as to not produce restriction to the purpose of the present invention. The others are the same with Embodiment 1.

### Embodiment 3

A reversible temperature-changing and erasable neutral ink, comprising procedures as follows:
(a) 50 by weight of reversible temperature-changing pigment with particle dispersion by size of 1~50 micrometer (temperature-changing pigment is -30°C∼80°C ; temperature of color eliminating is 43 °C ~80°C, temperature of color returning is -1 °C ∼-30°C);
(b) 5 by weight of vegetable glue and acrylic emulsion;
(c) 5 by weight of triethanolamine, ammonium hydroxide and carbamide;
(d) 20 by weight of polyethylene glycol 400, polyethylene glycol 600, polyethylene glycol 800;
(e) 0.5 by weight of antiseptic antimildew agent;
(f) 72.95 by weight of deionized water;

The mixture is obtained by the above described mixing; the weight of the above described composition is of 100% percent of total weight of the component, calculating by the total weight of the reversible temperature-changing and erasable neutral ink, the kind and composition of the agent has no restriction, so long as to not produce restriction to the purpose of the present invention.The others are the same with Embodiment 1.

### Embodiment 4

A reversible temperature-changing and erasable neutral ink, comprising procedures as follows:
(a) 35 by weight of reversible temperature-changing pigment with particle dispersion by size of 1~50 micrometer (temperature-changing pigment is -30°C∼80°C; temperature of color eliminating is 43 °C ∼80°C, temperature of color returning is -1 °C ∼30°C);
(b) 4 by weight of modified polyethylene polysaccharide;
(c) 3 by weight of carbamide;
(d) 9 by weight of sorbitol and newtol;
(e) 0.1 by weight of antiseptic antimildew agent;
(f) 37 by weight of deionized water;

The mixture is obtained by the above described mixing; the weight of the above described composition is of 95% percent of total weight of the component. In above described composition it contains 5% other agent, calculating by the total weight of the reversible temperature-changing and erasable neutral ink, the kind and composition of the agent has no restriction, so long as to not produce restriction to the purpose of the present invention. The others are the same with Embodiment 1.

### Embodiment 5

A reversible temperature-changing and erasable neutral ink, comprising procedures as follows:
(a) 35 by weight of reversible temperature-changing pigment with particle dispersion by size of 1∼50 micrometer (temperature-changing pigment is -30°C∼80°C; temperature of color eliminating is 43 °C ∼80°C, temperature of color returning is -1°C∼-30°C);
(b) 4 by weight of modified polyethylene polysaccharide;
(d) 9 by weight of sorbitol and newtol;
(c) 0.1 by weight of antiseptic antimildew agent;
(f) 37 by weight of deionized water;

The mixture is obtained by the above described mixing; the weight of the above described composition is of 95% percent of total weight of the component. In above described composition it contains 5% other agent, calculating by the total weight of the reversible temperature-changing and erasable neutral ink, the kind and composition of the agent has no restriction, so long as to not produce restriction to the purpose of the present invention. The others are the same with Embodiment 1.

## Claims

1. A reversible temperature-changing and erasable neutral ink component, which characterizes in, comprising by weight of composition as follows:
(a) 30∼50 by weight of reversible temperature-changing pigment;
(b) 2∼5 by weight of shear thinned viscosity regulator;
(c) 0∼5 by weight of viscosity stabilizer;
(d) 5∼20 by weight of moisture wetting agent;
(e) 0.05∼0.5 by weight of antiseptic antimildew agent;
(f) 14.5∼72.95 by weight of deionized water;
the weight of all the composition of (a)~(f) is 95∼100% percent of total weight of the component.

2. The component of claim 1, which characterizes in, the reversible temperature-changing pigment of (a) is taken from: temperature-changing pigment with particle dispersion by size of 1∼50 micrometer or reversible temperature-changing microcapsule wrapped by resin.

3. The component of claim 2, which characterizes in, temperature range of the temperature-changing pigment is -30°C~80°C; temperature of color eliminating is 43°C~80 °C, temperature of color returning is - °C∼-30°C.

4. The component of claim 2, which characterizes in, the resin wrapped the reversible temperature-changing microcapsule is taken from acrylic resin or polyurethane resin or melamine resin.

5. The component of claim 1, which characterizes in, the shear thinned viscosity regulator of (b) is material controlling the exponent of the shear thinned of the ink betweent 2.5∼5.

6. The component of claim 5, which characterizes in, the shear thinned viscosity regulator is taken from: konjac glucomannan, xanthan gum, guar gum, vegetable glue, acrylic emulsion and modified polyethylene polysaccharide or combinations thereof.

7. The component of claim 1, which characterizes in, the viscosity stabilizer of (c) is taken from: triethanolamine, ammonium hydroxide and carbamide or combinations thereof.

8. The component of claim 1, which characterizes in, the moisture wetting agent of (d) is taken from: glycerinum, ethanediol, polyethylene glycol 200, polyethylene glycol 400, polyethylene glycol 600, polyethylene glycol 800, sorbitol and newtol or combinations thereof.

9. A manufacture methord of the component of claim 1, which characterizes in, comprising procedures as follows: stiring and dispersing the acceptable weight of deionized water and reversible temperature-changing pigment evenly, then separating the dispersed liquid using centrifugation and cotrolling the size of the reversible temperature-changing pigment particle 1∼6 micrometer to obtain reversible temperature-changing pigment dispersed liquid or reversible temperature-changing microcapsule; adding the reversible temperature-changing pigment dispersed liquid or reversible temperature-changing microcapsule after stiring and mixing the other deionized water, antiseptic antimildew agent, dispersing agent, moisture wetting agent and viscosity stabilizer, and adding the shear thinned viscosity regulator during the stiring, and rasing the stiring speed according to the rasing viscosity, stiring and mixing to obtain the mixture.

10. A reversible temperature-changing and erasable neutral ink obtained by the component of claim 1∼8.
